# EUROPEAN PATENT APPLICATION

(11) **EP 4 582 589 A1**
(43) Date of publication of application: **09.07.2025**
(21) Application number: 23859531.8
(22) Date of filing: 23.10.2023
(51) Int. Cl.: C25B 1/04, C25B 9/60, E03B 3/28

(54) **DIRECT AIR ELECTROLYSIS HYDROGEN PRODUCTION SYSTEM**

(30) Priority: 02.09.2022 CN 202211070454
(71) Applicant: Sichuan University, Chengdu, Sichuan 610041 (CN)
(72) Inventor: XIE, Heping, Chengdu, Sichuan 610041 (CN); LIU, Tao, Chengdu, Sichuan 610041 (CN); ZHAO, Zhiyu, Chengdu, Sichuan 610041 (CN); WU, Yifan, Chengdu, Sichuan 610041 (CN)
(74) Representative: Ipside
(86) International application number: PCT/CN2023/125929
(87) International publication number: WO 2024/046505

(57) **Abstract**

The present application belongs to the technical field of electrolytic hydrogen production, and particularly relates to a direct air electrolytic hydrogen production system. The system comprises an energy supply module, an electrolytic hydrogen production module, an electrolyte recycling module and a moisture vapor self-trapping module, wherein the energy supply module is connected to the electrolytic hydrogen production module; the electrolytic hydrogen production module comprises an electrolyzer; and the electrolyte recycling module is connected to the electrolytic hydrogen production module and the moisture vapor self-trapping module separately. The system may realize direct air electrolytic hydrogen production, while its energy consumption for electrolysis is comparable to that of industrial pure water electrolysis for hydrogen production, without additional energy consumption for desalination/purification of impure water solutions or for harvesting moisture from the air. The system greatly broadens the range of hydrogen energy sources without time and space limitation, providing technical support for future distributed hydrogen energy arrangement.

## Description

### Technical Field

The present application belongs to the technical field of electrolytic hydrogen production, and particularly relates to a direct air electrolytic hydrogen production system.

### Background of the Invention

Hydrogen energy is a key component of energy in the future because of its advantages of wide sources, storability, versatility, zero carbon and pollution, and high energy density. As a circulation medium between the oceans, lakes and so on and the lands, air has plenty of molecules of water. Statistically, the global atmosphere contains an estimated 13 trillion tons of water vapor, which is a highly potential source of moisture for water-electrolytic hydrogen production.

The electrolytic hydrogen production processes with air resources are available, and the processes of the prior art have the following problems:
(1) Electrolytic hydrogen production is carried out with liquid water collected by means of compression refrigeration and the like. The energy consumption for liquefaction with the technology will further push up the cost of hydrogen production.
(2) With radiation refrigeration, hygroscopic water harvesting and other technologies, it is possible to collect water without energy consumption for electrolytic hydrogen production. However, such treatment is severely restricted by time and geography and is difficult to produce hydrogen continuously; and it is also difficult to avoid such technical bottlenecks as interference of foreign ions on oxygen evolution reaction due to the limited materials.

The air electrolytic hydrogen production technologies of the prior art are still difficult to simultaneously achieve high current density, high stability and large-scale utilization without energy consumption for water harvesting and temporal and spatial constraints. Therefore, there is an urgent need for a novel principle and technology to realize high-performance and large-scale direct air electrolytic hydrogen production.

### Summary of the Invention

It is an object of the present application to provide a direct air electrolytic hydrogen production system to overcome the shortcomings of the prior art. The system may fundamentally solve the problem of water resources constraint in water-electrolytic hydrogen production without additional energy consumption and temporal and spatial constraints; and it assists in setting conversion of hydrogen energy free from the temporal and spatial constraints in the future to completely avoid the cost and technical difficulties of transporting the hydrogen energy.

To achieve the above objects, the specific technical solution of the present application is as follows:
A direct air electrolytic hydrogen production system, which comprises an energy supply module, an electrolytic hydrogen production module, an electrolyte recycling module and a moisture vapor self-trapping module, wherein:
the energy supply module is connected to the electrolytic hydrogen production module to provide electricity for an electrolytic hydrogen production reaction; the electrolytic hydrogen production module comprises an electrolyzer, when an electrolyte is introduced into the electrolyzer, a redox reaction occurs, which consumes water and produces hydrogen and oxygen; the electrolyte recycling module, which is used to replenish the electrolyte with pure water from a hygroscopic medium, is connected to the electrolytic hydrogen production module and the moisture vapor self-trapping module separately; and
the moisture vapor self-trapping module, for absorbing moisture in the air, is used as a source continuously providing water for electrolytic hydrogen production.

Preferably, an energy source of the energy supply module is electrical energy converted from conventional coal power or renewable energy (e.g., solar energy and wind energy).

Preferably, the electrolyzer is optionally selected from an alkaline electrolyzer, a proton exchange membrane (PEM) electrolyzer, an anion exchange membrane (AEM) electrolyzer, or a combination formed by connecting any one of these electrolyzers in series or in parallel.

Preferably, the electrolyte loaded in the electrolyzer is a liquid electrolyte or a solid gel electrolyte; the liquid electrolyte is a liquid having a low saturated water vapor pressure or having the function of absorbing water vapor, including an alkaline liquid electrolyte, an acidic liquid electrolyte and an ionic liquid; and the alkaline liquid electrolyte is selected from a KOH solution, a K₂CO₃ solution, a KHCO₃ solution, a NaOH solution, a Na₂CO₃ solution, a NaHCO₃ solution, a K₃PO₄ solution, a CH₃COOK solution, Ca(OH)₂ and other alkaline substances, or a combination thereof. The acidic liquid electrolyte is selected from an H₂SO₄ solution, an H₃PO₄ solution and other acidic substances, or a combination thereof. The ionic liquid is selected from 1-ethyl-3 methylimidazole acetate and the like. An organic hygroscopic liquid is selected from PEG and the like. The solid electrolyte is a substance having the function of inducing the phase-change liquefaction of water vapor, and the solid gel electrolyte is selected from a polyacrylamide hydrogel, a polysulfonic acrylamide hydrogel, a polymethylacrylamide hydrogel, a polybenzylacrylamide hydrogel, a polyphenylacrylamide hydrogel, a polyethylacrylamide hydrogel, a polytert-butylacrylamide hydrogel, and any one of hygroscopic gels comprising a hydroxyl, sulfonate, carboxylic, amido, ether and other hydrophilic groups, or a combination thereof.

Further preferably, the electrolytic hydrogen production module comprises the electrolyzer and an electrolyte temperature controller; the electrolyzer is connected to the electrolyte temperature controller. Preferably, the electrolyte recycling module is a module for realizing a "liquid-gas-liquid" phase change and migration process, which directly replenishes the electrolyte solution with pure water by using the hygroscopic medium, and comprises a second-stage energy-free mass transfer device; the second-stage energy-free mass transfer device is a device that divides space into an electrolyte chamber and a hygroscopic medium chamber by means of a waterproof and breathable layer, or any mass transfer device capable of achieving two-phase or multi-phase liquid isolation but allowing the passage of gases; alternatively, it may be selected from commercially available devices having a similar structure, such as a flat membrane distillation reaction mass transfer device, a hollow fiber membrane distillation reaction mass transfer device, or a falling-film absorbing column, but the substances loaded therein are replaced with the electrolyte and the hygroscopic medium, respectively.

Further preferably, the electrolyte recycling module comprises a heat exchanger, a filter, the second-stage energy-free mass transfer device, an electrolyte circulating pump and an electrolyte check valve; the electrolyzer of the electrolytic hydrogen production module is connected to the heat exchanger, and the heat exchanger is connected to the filter and then communicated with the second-stage energy-free mass transfer device; the second-stage energy-free mass transfer device is connected to the electrolyte temperature controller of the electrolytic hydrogen generation module through the electrolyte circulating pump and the electrolyte check valve, and the electrolyte temperature controller is connected to the electrolyzer.

Preferably, the waterproof and breathable layer is a commercially available waterproof and breathable layer, or a porous waterproof and breathable mass transfer layer selected from any of a porous TPU membrane, PDMS and a PTFE membrane, or prepared with graphene, PVDF particles or PTFE particles by spraying, screen printing or an electrostatic adsorption process.

Preferably, the moisture vapor self-trapping module is a module for realizing a "gas-liquid" phase change and migration process, which is used for directly harvesting moisture from the air, and comprises a first-stage energy-free mass transfer device and a hygroscopic medium circulating pump; the first-stage energy-free mass transfer device is a container for convection or contact between the hygroscopic medium and the air, or a device for gas-liquid phase mass transfer, e.g., a spray column, a plate column, a falling-film column, an aerosol column, an absorbing column, a bubble column and a device having a similar structure, but the loaded substance is replaced with the hygroscopic medium; and the hygroscopic medium absorbs moisture from the air in the first-stage energy-free mass transfer device and further replenishes the electrolyte with water in the second-stage energy-free mass transfer device in the electrolyte recycling module.

Further preferably, the moisture vapor self-trapping module comprises the first-stage energy-free mass transfer device, the hygroscopic medium circulating pump and a hygroscopic medium check valve; and the first-stage energy-free mass transfer device is communicated with the hygroscopic medium chamber in the electrolyte recycling module through the hygroscopic medium circulating pump and the hygroscopic medium check valve.

Preferably, the hygroscopic medium employed in the hygroscopic medium chambers of the first-stage energy-free mass transfer device and the second-stage energy-free mass transfer device may be selected from glycerol, a CaSO₄ solution, an MgSO₄ solution, a LiBr solution, a CaCl₂ solution, a CsF solution, a LiCl solution and the like. The electrolyte chamber in the second-stage energy-free mass transfer device is loaded with the same electrolyte as that in the electrolyzer.

Preferably, the system further comprises a hydrogen collecting module and an oxygen collecting module; wherein the hydrogen collecting module comprises a hydrogen separator, a hydrogen scrubber, a hydrogen cooler and a hydrogen storage tank; the oxygen collecting module comprises an oxygen separator, an oxygen scrubber, an oxygen cooler and an oxygen storage tank; both of the hydrogen separator and the oxygen separator are separately connected to the electrolyzer, and the hydrogen scrubber, the hydrogen cooler and the hydrogen storage tank are connected sequentially behind the hydrogen separator; and the oxygen scrubber, the oxygen cooler and the oxygen storage tank are connected sequentially behind the oxygen separator.

Preferably, the system further comprises a cooling module, and the module comprises a radiator, a cooling water tank and a cooling water pump; the cooling water tank is connected to the radiator, and connected to the hydrogen separator, the hydrogen scrubber, the hydrogen cooler, the oxygen separator, the oxygen scrubber, the oxygen cooler and a heat exchanger through the cooling water pump to provide cooling water and maintain cooling environment.

Preferably, a temperature controller is coupled in front of the first-stage energy-free mass transfer device to realize temperature control of the hygroscopic medium, thereby regulating the interfacial vapor pressure of the hygroscopic medium in the first-stage energy-free mass transfer device and achieving better moisture absorption from the air; and another temperature controller is coupled in front of the second-stage energy-free mass transfer device to realize temperature control of the hygroscopic medium, thereby regulating the interfacial vapor pressure of the hygroscopic medium in the second-stage energy-free mass transfer device and achieving better secondary migration mass-transfer effect and controllable regulation.

Preferably, the electrolyte pumped out of the electrolyzer and the electrolyte collected from the hydrogen separator, the oxygen separator, the hydrogen scrubber and the oxygen scrubber pass through the heat exchanger and the filter and then enters the second-stage energy-free mass transfer device. When the electrolyte and the hygroscopic medium flow closely against the waterproof and breathable layer, an interfacial water vapor pressure difference between the electrolyte and the hygroscopic medium causes the hygroscopic medium to undergo phase-change gasification, the resulted water vapor enters the electrolyte side by passing through the waterproof and breathable layer, and undergoes secondary phase-change liquefaction in the presence of the interfacial pressure difference; also, the waterproof and breathable layer effectively prevents the electrolyte and the hygroscopic medium from contaminating each other by osmosis, and the process continuously replenishes the electrolyte with pure water for electrolysis; and the electrolysis consumes water to maintain the interfacial water vapor pressure difference between the electrolyte and the hygroscopic medium in the second-stage energy-free mass transfer device and an interfacial water vapor pressure difference between the hygroscopic medium and the air in the first-stage energy-free mass transfer device, thus inducing continuous replenishment of water to the electrolyte. After the moisture is transferred to the electrolyte, the hygroscopic medium circulates to the moisture vapor trapping module. The moisture vapor trapping module comprises the first-stage energy-free mass transfer device, the hygroscopic medium circulating pump and the check valve, and is also one of the most important portions of the overall system. The hygroscopic medium further absorbs moisture from the air in the first-stage energy-free mass transfer device in preparation for transferring water to the electrolyte in the second-stage energy-free mass transfer device in the next cycle.

A direct air electrolytic hydrogen production system, which comprises an energy supply module, an electrolyzer, a hydrogen separator, a hydrogen scrubber, a hydrogen regulating valve, a hydrogen check valve, a hydrogen cooler, a hydrogen storage tank, an oxygen separator, an oxygen scrubber, an oxygen regulating valve, an oxygen check valve, an oxygen cooler, an oxygen storage tank, a radiator, a cooling water tank, a cooling water pump, a heat exchanger, a filter, a second-stage energy-free mass transfer device, an electrolyte circulating pump, an electrolyte check valve, an electrolyte temperature controller, a hygroscopic medium check valve, a hygroscopic medium circulation pump and a first-stage energy-free mass transfer device; wherein the second-stage energy-free mass transfer device divides a confined space into an electrolyte mass-transfer chamber and a hygroscopic medium mass-transfer chamber by means of a waterproof and breathable layer; the first-stage energy-free mass transfer device is a container for convection or contact between a hygroscopic medium and air, or a device for gas-liquid phase mass transfer, e.g., a spray column, a plate column, a falling-film column, an aerosol column, an absorbing column, a bubble column and a device with similar structure, but the loaded substance is replaced with the hygroscopic medium; the energy supply module is connected to a cathode and an anode of the electrolyzer to provide electricity; the hydrogen separator is disposed on the cathode side of the electrolyzer, and the hydrogen scrubber, the hydrogen regulating valve, the hydrogen check valve, the hydrogen cooler and the hydrogen storage tank are arranged sequentially behind the hydrogen separator; the oxygen separator is disposed on the anode side of the electrolyzer, and the oxygen scrubber, the oxygen regulating valve, the oxygen check valve, the oxygen cooler and the oxygen storage tank are arranged sequentially behind the oxygen separator; the electrolyzer, the hydrogen separator and the oxygen separator are connected to the heat exchanger, and the heat exchanger is connected to the filter and then communicated with the second-stage energy-free mass transfer device; the second-stage energy-free mass transfer device is connected to the electrolyte temperature controller through the electrolyte circulating pump and the electrolyte check valve, and the electrolyte temperature controller is connected to the electrolyzer; the first-stage energy-free mass transfer device is loaded with the hygroscopic medium, the hygroscopic medium undergo mass transfer with air to absorb moisture from the air, and the first-stage energy-free mass transfer device is in circular connection with the second-stage energy-free mass transfer device through the hygroscopic medium circulating pump, the hygroscopic medium check valve and a corresponding pipeline; and the cooling water tank is connected to the hydrogen separator, the hydrogen scrubber, the hydrogen cooler, the oxygen separator, the oxygen scrubber, the oxygen cooler and the heat exchanger through the cooling water pump, separately.

Preferably, each module in the system is connected to a control system for automating the control process.

A direct air electrolytic hydrogen production process, which comprises the following steps: moisture in the air is transferred to a hygroscopic medium in a first-stage energy-free mass transfer device in a moisture vapor self-trapping module, the moistened hygroscopic medium further transfers the moisture to an electrolyte side in a second-stage energy-free mass transfer device in an electrolyte recycling module, an electrolyte obtaining the pure water undergoes an electrolytic hydrogen production reaction in an electrolyzer and the reaction consumes moisture; the electrolysis consumes moisture synchronously, further maintaining an interfacial pressure difference between the electrolyte and the hygroscopic medium as well as an interfacial pressure difference between the hygroscopic medium and the air, thus further promoting the hygroscopic medium to obtain moisture from the air and replenish to the electrolyte; and during the process, when an electrolysis rate equals a first-stage mass transfer rate and a second-stage mass transfer rate concurrently, the continuous direct air electrolytic hydrogen production process is realized.

Preferably, the above-mentioned direct air electrolytic hydrogen production process comprises the following specific steps: an energy supply module providing electricity for an electrolytic hydrogen production module; first, the electrolyte is connected to a cathode, or an anode, or both of the cathode and the anode of the electrolyzer, and a redox reaction occurs for producing hydrogen and oxygen; for the case of an alkaline electrolyzer or an **AEM** electrolyzer, the electrolyte undergoes a reduction and hydrogen evolution reaction at the cathode, and then the produced OH- enters the anode by passing through a diaphragm or an anion exchange membrane, and an oxidation reaction occurs and produces oxygen; for the case of a PEM electrolyzer, the electrolyte undergoes an oxidation and oxygen evolution reaction at the anode, and then the produced H₊ enters the cathode by passing through a proton exchange membrane, and a reduction reaction occurs and produces hydrogen;
the produced hydrogen and oxygen enter a hydrogen separator and an oxygen separator, respectively, during the process the produced hydrogen and oxygen are separated from the entrained electrolyte or moisture; the separated hydrogen and oxygen enter a hydrogen scrubber and an oxygen scrubber, respectively, during the process the remained electrolyte and moisture are thoroughly scrubbed from the gases;
under the control regulation of a hydrogen regulating valve and a hydrogen check valve, the scrubbed hydrogen enters a hydrogen cooler to be dried and cooled, and then stored in a hydrogen storage tank; under the control regulation of an oxygen regulating valve and an oxygen check valve, the scrubbed oxygen enters an oxygen cooler to be dried and cooled, and then stored in an oxygen storage tank;
the post-reaction electrolyte in the electrolyzer and the electrolyte separated and recycled from the hydrogen separator, the hydrogen scrubber, the oxygen separator and the oxygen scrubber passes through a heat exchanger, and any possibly entrained impurity is removed through a filter; after the impurity removal, the electrolyte enters electrolyte chamber in the second-stage energy-free mass transfer device, and the hygroscopic medium is continuously sent to hygroscopic medium chamber, wherein the two chambers are isolated from each other by using a waterproof and breathable layer, which only allows water vapor to pass through to prevent the liquids from contaminating each other by osmosis; in that case, when the electrolyte and the hygroscopic medium simultaneously pass through the second-stage energy-free mass transfer device, under the interfacial pressure difference therebetween, the hygroscopic medium is gasified on the surface of the waterproof and breathable layer and produces water vapor, the water vapor enters the electrolyte side by passing through the waterproof and breathable layer, and undergoes phase-change liquefaction in the presence of the interfacial pressure difference to replenish the electrolyte with water;
the electrolyte with replenished water enters a temperature controller through an electrolyte circulating pump and a check valve, and then circulates into the electrolyzer after the optimal electrolytic temperature is reached to cause an electrolytic hydrogen production reaction; and
after the moisture in the hygroscopic medium is transferred to the electrolyte, the hygroscopic medium circulates to the first-stage energy-free mass transfer device in the moisture vapor self-trapping module, and absorbs moisture in the air under the effect of the interfacial pressure difference between air and the hygroscopic medium, thereby preparing for water replenishment to the electrolyte in the next cycle.

Preferably, in the system, moisture in the air is transferred to the hygroscopic medium in the first-stage energy-free mass transfer device in the moisture vapor trapping module (primary mass transfer), the moistened hygroscopic medium further transfers the moisture to an electrolyte side in the second-stage energy-free mass transfer device in the electrolyte recycling module (secondary mass transfer), the electrolyte obtaining the pure water undergoes an electrolytic hydrogen production reaction in the electrolyzer and the reaction consumes moisture; the electrolysis consumes moisture, further maintaining an interfacial pressure difference between the electrolyte and the hygroscopic medium as well as an interfacial pressure difference between the hygroscopic medium and the air, thus further promoting the hygroscopic medium to obtain moisture from the air and replenish to the electrolyte; and the process establishes a new thermodynamic equilibrium, when an electrolysis rate equals a first-stage mass transfer rate and a second-stage mass transfer rate concurrently, the overall system is in balance and the continuous and stable direct hydrogen production with air is realized. In addition, the system may further dynamically adjust the rates of the primary mass transfer and the secondary mass transfer through the vapor pressure changes caused by adjustment of the hygroscopic medium and the electrolyte concentration, thus matching environment with various air humidities.

The above-mentioned system may realize direct air electrolytic hydrogen production, while its energy consumption for electrolysis is comparable to that of industrial pure water electrolysis for hydrogen production, without additional energy consumption for desalination/purification of impure water solutions or for harvesting moisture from the air.

Compared with the prior art, the present application has the following beneficial effects:
(1) The system may realize direct air electrolytic hydrogen production process, while its energy consumption for electrolysis is comparable to that of industrial pure water electrolysis, without additional energy consumption for desalination/purification or for harvesting moisture from the air.
(2) In the system, moisture in the air is transferred to the hygroscopic medium in the first-stage energy-free mass transfer device in the moisture vapor self-trapping module (primary mass transfer), the moistened hygroscopic medium further transfers the moisture to the electrolyte side in the second-stage energy-free mass transfer device in the electrolyte recycling module (secondary mass transfer), the electrolyte obtaining the pure water undergoes the electrolytic hydrogen production reaction in the electrolyzer and the reaction consumes moisture; and the electrolysis consumes moisture, which in turn further maintains the interfacial pressure difference between the electrolyte and the hygroscopic medium as well as the interfacial pressure difference between the hygroscopic medium and the air, thus further promoting the hygroscopic medium to obtain moisture from the air and replenish to the electrolyte. The process establishes the new thermodynamic equilibrium, when the electrolysis rate equals the first-stage mass transfer rate and the second-stage mass transfer rate concurrently, the overall system is in balance and the continuous and stable direct hydrogen production with air is realized.
(3) The system may further dynamically adjust the rates of the primary mass transfer and the secondary mass transfer through the vapor pressure changes caused by adjustment of its own concentration, thus matching environment with various air humidities.
(4) The system avoids the temporal and spatial constraints to the principle and technology of hydrogen production from the air, the competition problem in the oxygen evolution reaction caused by foreign matters in the system, the bottleneck of catalyst deactivation caused by foreign ions, and the toxicity and corrosiveness from side reactions.
(5) The system harvests hydrogen and oxygen separately to obtain the highly purified hydrogen and highly purified oxygen simultaneously.
(6) The system may realize an efficient, continuous and stable air-based hydrogen production process without water harvesting energy consumption or temporal and spatial constraints; in addition, it supports energy conversion and stable storage of unstable renewable energy sources, and provides technical means for the construction of a future distributed energy system.
(7) The technology is expected to realize an all-terrain and distributed hydrogen energy pattern and accelerate the integration of hydrogen production and hydrogenation.

### Brief Description of the Drawings

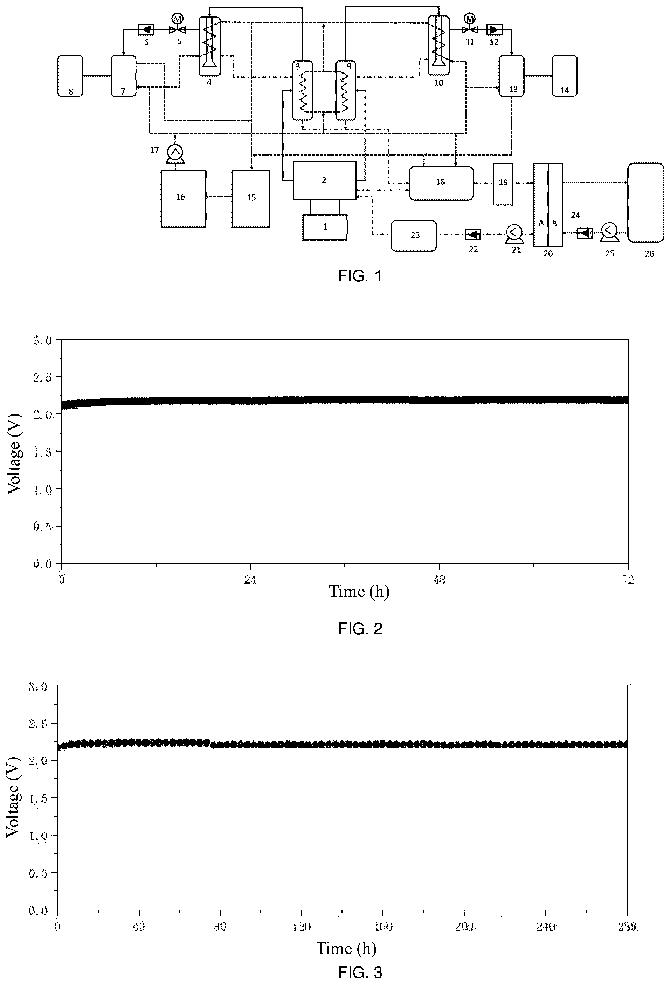

FIG. 1 is a structural diagram of the direct air electrolytic hydrogen production system of the present application;
   reference numerals and corresponding part names in FIG. 1: 1-energy supply module; 2-electrolyzer; 3-hydrogen separator; 4-hydrogen scrubber; 5-hydrogen regulating valve; 6-hydrogen check valve; 7-hydrogen cooler; 8-hydrogen storage tank; 9-oxygen separator; 10-oxygen scrubber; 11-oxygen regulating valve; 12-oxygen check valve; 13 -oxygen cooler; 14-oxygen storage tank; 15-radiator; 16-cooling water tank; 17-cooling water pump; 18-heat exchanger; 19 -filter; 20-second-stage energy-free mass transfer device; 21-electrolyte circulating pump; 22-electrolyte check valve; 23-electrolyte temperature controller; 24-hygroscopic medium check valve; 25-hygroscopic medium circulating pump; 26-first-stage energy-free mass transfer device; A-electrolyte chamber; B-hygroscopic medium chamber.
FIG. 2 is a test plot of the stability of the direct air electrolytic hydrogen production in Example 1;
FIG. 3 is a test plot of the stability of the direct air electrolytic hydrogen production in Example 2;
FIG. 4 is a test plot of the stability of the direct air electrolytic hydrogen production in Example 3; and
FIG. 5 is a test plot of the stability of the direct air electrolytic hydrogen production in Example 4.

### Detailed Description of Embodiments

The present application will be further described in detail in combination with embodiments for clear understanding of the purpose, technical solutions and advantages of the present application, but it should not be interpreted that the above-mentioned subject matters of the present application are limited to the following embodiments. Without departing from the above-mentioned technical thought of the present application, all substitutions and variations made according to the common knowledge and the common technical means in the art shall fall within the scope of the present application.

### Example 1:

As shown in FIG. 1, a direct air electrolytic hydrogen production system, which comprises an energy supply module, an electrolytic hydrogen production module, an electrolyte recycling module and a moisture vapor self-trapping module, wherein the energy supply module is connected to the electrolytic hydrogen production module to provide electricity for a hydrogen production reaction; in this embodiment, the energy supply module is a commercial power supply;
the electrolytic hydrogen production module comprises an electrolyzer, the electrolyzer adopts a self-made alkaline electrolyzer (consisting of five electrolysis units connected in parallel, wherein the electrolysis units each comprise a cathode and an anode separated by a diaphragm, the anode is foamed nickel-molybdenum, the cathode is nickel-plated platinum, and the diaphragm is a polysulfone porous membrane), when an electrolyte is introduced into the electrolyzer, a redox reaction occurs, which consumes water and produces hydrogen and oxygen; the electrolyte recycling module, which is used to replenish the electrolyte with pure water from a hygroscopic medium, is connected to the electrolytic hydrogen production module and the moisture vapor self-trapping module separately; and the moisture vapor self-trapping module, for absorbing moisture in the air, is used as a source continuously providing water for electrolytic hydrogen production.

The electrolyte recycling module is a module for realizing a "liquid-gas-liquid" phase change and migration process, which directly replenishes the electrolyte solution with pure water by using the hygroscopic medium, and comprises a second-stage energy-free mass transfer device; and the second-stage energy-free mass transfer device is a device that divides space into an electrolyte chamber and a hygroscopic medium chamber by means of a waterproof and breathable layer.

The moisture vapor self-trapping module is a module for realizing a "gas-liquid" phase change and migration process, which is used for directly harvesting moisture from the air, and comprises a first-stage energy-free mass transfer device and a hygroscopic medium circulating pump; the first-stage energy-free mass transfer device is an open container for convection or contact between the hygroscopic medium and the air. In this embodiment, an ordinary open container is employed, but the substance loaded is replaced with the hygroscopic medium.

The electrolyte pumped out of the electrolyzer enters the second-stage energy-free mass transfer device. When the electrolyte and the hygroscopic medium flow closely against the waterproof and breathable layer, an interfacial water vapor pressure difference between the electrolyte and the hygroscopic medium causes the hygroscopic medium to undergo phase-change gasification, the resulted water vapor enters the electrolyte side by passing through the waterproof and breathable layer, and undergoes secondary phase-change liquefaction in the presence of the interfacial pressure difference; also, the waterproof and breathable layer effectively prevents the electrolyte and the hygroscopic medium from contaminating each other by osmosis, and the process continuously replenishes the electrolyte with pure water for electrolysis; and the electrolysis consumes water to maintain the interfacial water vapor pressure difference between the electrolyte and the hygroscopic medium in the second-stage energy-free mass transfer device and an interfacial water vapor pressure difference between the hygroscopic medium and the air in the first-stage energy-free mass transfer device, thus inducing continuous replenishment of water to the electrolyte. After the moisture is transferred to the electrolyte, the hygroscopic medium circulates to the moisture vapor self-trapping module. The moisture vapor self-trapping module comprises the first-stage energy-free mass transfer device, the hygroscopic medium circulating pump and a check valve, and is also one of the most important portions of the overall system. The hygroscopic medium further absorbs moisture from the air in the first-stage energy-free mass transfer device in preparation for transferring water to the electrolyte in the second-stage energy-free mass transfer device in the next cycle.

Specific procedures: a PTFE porous waterproof and breathable membrane was used as the waterproof and breathable layer in the second-stage energy-free mass transfer device, with an effective mass transfer area of 2m²; 45 wt% potassium hydroxide solution was used as the electrolyte; 30 wt% LiBr solution was used as the hygroscopic medium; and the first-stage energy-free mass transfer device was an open container, with an effective contact area of 4 m² with air. As shown in FIG. 2, both lithium bromide solution and the electrolyte solution were at room temperature, and the device was tested in ambient air (with average temperature of 25°C and average humidity of 70%) under the condition of 250mA/cm², which steadily operated for 72h at an actual stack voltage of about 2.2V. Example 2:
A direct air electrolytic hydrogen production system, which comprises an energy supply module, an electrolyzer, a hydrogen separator, a hydrogen scrubber, a hydrogen regulating valve, a hydrogen check valve, a hydrogen cooler, a hydrogen storage tank, an oxygen separator, an oxygen scrubber, an oxygen regulating valve, an oxygen check valve, an oxygen cooler, an oxygen storage tank, a radiator, a cooling water tank, a cooling water pump, a heat exchanger, a filter, a second-stage energy-free mass transfer device, an electrolyte circulating pump, an electrolyte check valve, an electrolyte temperature controller, a hygroscopic medium check valve, a hygroscopic medium circulation pump and a first-stage energy-free mass transfer device; wherein the second-stage energy-free mass transfer device divides space into an electrolyte mass-transfer chamber and a hygroscopic medium chamber by means of a waterproof and breathable layer; the first-stage energy-free mass transfer device is a container for mass transfer between a hygroscopic medium and air; the energy supply module is connected to a cathode and an anode of the electrolyzer to provide electricity; the hydrogen separator is disposed on the cathode side of the electrolyzer, and the hydrogen scrubber, the hydrogen regulating valve, the hydrogen check valve, the hydrogen cooler and the hydrogen storage tank are arranged sequentially behind the hydrogen separator; the oxygen separator is disposed on the anode side of the electrolyzer, and the oxygen scrubber, the oxygen regulating valve, the oxygen check valve, the oxygen cooler and the oxygen storage tank are arranged sequentially behind the oxygen separator; the electrolyzer, the hydrogen separator and the oxygen separator are connected to the heat exchanger, and the heat exchanger is connected to the filter and then communicated with the second-stage energy-free mass transfer device; the second-stage energy-free mass transfer device is connected to the electrolyte temperature controller through the electrolyte circulating pump and the electrolyte check valve, and the electrolyte temperature controller is connected to the electrolyzer; the first-stage energy-free mass transfer device is loaded with the hygroscopic medium, the hygroscopic medium undergo mass transfer with air to absorb moisture from the air, and the first-stage energy-free mass transfer device is in circular connection with the second-stage energy-free mass transfer device through the hygroscopic medium circulating pump, the hygroscopic medium check valve and a corresponding pipeline; and the cooling water tank is connected to the hydrogen separator, the hydrogen scrubber, the hydrogen cooler, the oxygen separator, the oxygen scrubber, the oxygen cooler and the heat exchanger through the cooling water pump, separately.

Each module in the system is connected to a control system for automating the control process. The electrolyte pumped out of the electrolyzer and the electrolyte collected from the hydrogen separator, the oxygen separator, the hydrogen scrubber and the oxygen scrubber pass through the heat exchanger and the filter and then enters the second-stage energy-free mass transfer device. When the electrolyte and the hygroscopic medium flow closely against the waterproof and breathable layer, an interfacial water vapor pressure difference between the electrolyte and the hygroscopic medium causes the hygroscopic medium to undergo phase-change gasification, the resulted water vapor
enters the electrolyte side by passing through the waterproof and breathable layer, and undergoes secondary phase-change liquefaction in the presence of the interfacial pressure difference; also, the waterproof and breathable layer effectively prevents the electrolyte and the hygroscopic medium from contaminating each other by osmosis, and the process continuously replenishes the electrolyte with pure water for electrolysis; and the electrolysis consumes water to maintain the interfacial water vapor pressure difference between the electrolyte and the hygroscopic medium in the second-stage energy-free mass transfer device and an interfacial water vapor pressure difference between the hygroscopic medium and the air in the first-stage energy-free mass transfer device, thus inducing continuous replenishment of water to the electrolyte. After the moisture is transferred to the electrolyte, the hygroscopic medium circulates to the moisture vapor trapping module. The moisture vapor self-trapping module comprises the first-stage energy-free mass transfer device, the hygroscopic medium circulating pump and the check valve, and is also one of the most important portions of the overall system. The hygroscopic medium further absorbs moisture from the air in the first-stage energy-free mass transfer device in preparation for transferring water to the electrolyte in the second-stage energy-free mass transfer device in the next cycle.

A direct air electrolytic hydrogen production process comprises the following specific steps: an energy supply module providing electricity for an electrolytic hydrogen production module; first, the electrolyte is connected to a cathode, or an anode, or both of the cathode and the anode of the electrolyzer, and a redox reaction occurs for producing hydrogen and oxygen; for the case of an alkaline electrolyzer or an AEM electrolyzer, the electrolyte undergoes a reduction and hydrogen evolution reaction at the cathode, and then the produced OH- enters the anode by passing through a diaphragm or an anion exchange membrane, and an oxidation reaction occurs and produces oxygen; for the case of a PEM electrolyzer, the electrolyte undergoes an oxidation and oxygen evolution reaction at the anode, and then the produced H₊ enters the cathode by passing through a proton exchange membrane, and a reduction reaction occurs and produces hydrogen;
the produced hydrogen and oxygen enter a hydrogen separator and an oxygen separator, respectively, during the process the produced hydrogen and oxygen are separated from the entrained electrolyte or moisture; the separated hydrogen and oxygen enter a hydrogen scrubber and an oxygen scrubber, respectively, during the process the remained electrolyte and moisture are thoroughly scrubbed from the gases;
under the control regulation of a hydrogen regulating valve and a hydrogen check valve, the scrubbed hydrogen enters a hydrogen cooler to be dried and cooled, and then stored in a hydrogen storage tank; under the control regulation of an oxygen regulating valve and an oxygen check valve, the scrubbed oxygen enters an oxygen cooler to be dried and cooled, and then stored in an oxygen storage tank;
the post-reaction electrolyte in the electrolyzer and the electrolyte separated and recycled from the hydrogen separator, the hydrogen scrubber, the oxygen separator and the oxygen scrubber passes through a heat exchanger, and any possibly entrained impurity is removed through a filter; after the impurity removal, the electrolyte enters electrolyte chamber in the second-stage energy-free mass transfer device, and the hygroscopic medium is continuously sent to hygroscopic medium chamber, wherein the two chambers are isolated from each other by using a waterproof and breathable layer, which only allows water vapor to pass through to prevent the liquids from contaminating each other by osmosis; in that case, when the electrolyte and the hygroscopic medium simultaneously pass through the second-stage energy-free mass transfer device, under the interfacial pressure difference therebetween, the hygroscopic medium is gasified on the surface of the waterproof and breathable layer and produces water vapor, the water vapor enters the electrolyte side by passing through the waterproof and breathable layer, and undergoes phase-change liquefaction in the presence of the interfacial pressure difference to replenish the electrolyte with water;
the electrolyte with replenished water enters a temperature controller through an electrolyte circulating pump and a check valve, and then circulates into the electrolyzer after the optimal electrolytic temperature is reached to cause an electrolytic hydrogen production reaction; and
after the moisture in the hygroscopic medium is transferred to the electrolyte, the hygroscopic medium circulates to the first-stage energy-free mass transfer device in the moisture vapor trapping module, and absorbs moisture in the air under the effect of the interfacial pressure difference between air and the hygroscopic medium, thereby preparing for water replenishment to the electrolyte in the next cycle.

In the system, moisture in the air is transferred to the hygroscopic medium in the first-stage energy-free mass transfer device in the moisture vapor self-trapping module (primary mass transfer), the moistened hygroscopic medium further transfers the moisture to an electrolyte side in the second-stage energy-free mass transfer device in the electrolyte recycling module (secondary mass transfer), the electrolyte obtaining the pure water undergoes an electrolytic hydrogen production reaction in the electrolyzer and the reaction consumes moisture; the electrolysis consumes moisture, further maintaining an interfacial pressure difference between the electrolyte and the hygroscopic medium as well as an interfacial pressure difference between the hygroscopic medium and the air, thus further promoting the hygroscopic medium to obtain moisture from the air and replenish to the electrolyte; and the process establishes a new thermodynamic equilibrium, when an electrolysis rate equals a first-stage mass transfer rate and a second-stage mass transfer rate concurrently, the overall system is in balance and the continuous and stable direct hydrogen production with air is realized. In addition, the system may further dynamically adjust the rates of the primary mass transfer and the secondary mass transfer through the vapor pressure changes caused by adjustment of its own concentration, thus matching environment with various air humidities.

Specific procedures: a PTFE porous waterproof and breathable membrane was used as the waterproof and breathable layer in the second-stage energy-free mass transfer device, with an effective mass transfer area of 2m²; 50 wt% potassium hydroxide solution was used as the electrolyte; 30 wt% lithium chloride solution was used as the hygroscopic medium; and the first-stage energy-free mass transfer device was an open container, with an effective contact area of 4m² with air. As shown in FIG. 3, both lithium chloride solution and the electrolyte solution were at room temperature, and the device was tested in ambient air of Chengdu (with average temperature of 25°C and average humidity of 65%) under the condition of 250mA/cm², which steadily operated for 280h at an actual stack voltage of about 2.2V, the electrolytic energy consumption was about 5.29kWh/Nm³H₂, and H₂ was produced at about 175L/h.

For other embodiments using the system, refer to the method and steps described in Example 2, with the differences as shown in Table 1:

| No. | Humidity | First-stage energy-free mass transfer device | Waterproof and breathable layer in second-stage energy-free mass transfer device | Hygroscop ic medium | Electrolyt e | Technical effects |
|---|---|---|---|---|---|---|
| 1 | 50%-100% | Open container | Self-made second-stage energy-free mass transfer device, wherein the waterproof and breathable layer is made of PTFE waterproof and breathable membrane with 0.1/0.45/1/3um pore size. | 30wt% | 35wt% | 250mA/cm², 2.1V |
| 2 | | | | | 40wt% | 250mA/cm², 2.13V |
| 3 | | | | | 45wt% | 250mA/cm², 2.15V |
| 4 | | | | | 50wt% | 250mA/cm², 2.2V |
| 5 | 40%-100% | | Self-made second-stage energy-free mass transfer device, wherein the waterproof and breathable layer is made of PTFE waterproof and breathable membrane with 0.1/0.45/1/3um pore size. | 35wt% | 40wt% | 250mA/cm², 2.12V |
| 6 | | | | | 45wt% | 250mA/cm², 2.14V |
| 7 | | | | | 50wt% | 250mA/cm², 2.21V |
| 8 | 30%-100% | | Self-made second-stage energy-free mass transfer device, wherein the waterproof and breathable layer is made of PTFE waterproof and breathable membrane with 0.1/0.45/1/3um pore size. | 40wt% | 45wt% | 250mA/cm², 2.16V |
| 9 | | | | | 50wt% | 250mA/cm², 2.22V |
| 10 | 50%-100% | Spray column | Self-made second-stage energy-free mass transfer device, wherein the waterproof and breathable layer is made of PTFE waterproof and breathable membrane with 0.1/0.45/1/3um pore size. | 30wt% | 35wt% | 250mA/cm², 2.1V |
| 11 | | | | | 40wt% | 250mA/cm², 2.13V |
| 12 | | | | | 45wt% | 250mA/cm², 2.15V |
| 13 | | | | | 50wt% | 250mA/cm², 2.2V |
| 14 | 40%-100% | Spray column | Self-made second-stage energy-free mass transfer device, wherein the waterproof and breathable layer is made of PTFE waterproof and breathable membrane with 0.1/0.45/1/3um pore size. | 35wt% | 40wt% | 250mA/cm², 2.13V |
| 15 | | | | | 45wt% | 250mA/cm², 2.14V |
| 16 | | | | | 50wt% | 250mA/cm², 2.19V |
| 17 | 30%-100% | Spray column | Self-made second-stage energy-free mass transfer device, wherein the waterproof and breathable layer is made of PTFE waterproof and breathable membrane with 0.1/0.45/1/3um pore size. | 40wt% | 45wt% | 250mA/cm², 2.14V |
| 18 | | | | | 50wt% | 250mA/cm², 2.21V |
| 19 | 50%-100% | Open container / Spray column | Commercially available flat membrane distillation reactor | 30wt% | 35wt% | 250mA/cm², 2.1V |
| 20 | | | | | 40wt% | 250mA/cm², 2.13V |
| 21 | | | | | 45wt% | 250mA/cm², 2.15V |
| 22 | | | | | 50wt% | 250mA/cm², 2.19V |
| 23 | 40%-100% | Open container/s pray column | Commercially available flat membrane distillation reactor | 35wt% | 40wt% | 250mA/cm², 2.12V |
| 24 | | | | | 45wt% | 250mA/cm², 2.15V |
| 25 | | | | | 50wt% | 250mA/cm², 2.2V |
| 26 | 30%-100% | Open container/s pray column | Commercially available flat membrane distillation reactor | 40wt% | 45wt% | 250mA/cm², 2.16V |
| 27 | | | | | 50wt% | 250mA/cm², 2.2V |
| 28 | 50%-100% | Open container/s pray column | Commercially available vacuum fiber membrane distillation reactor | 30wt% | 35wt% | 250mA/cm², 2.09V |
| 29 | | | | | 40wt% | 250mA/cm², 2.13V |
| 30 | | | | | 45wt% | 250mA/cm², 2.16V |
| 31 | | | | | 50wt% | 250mA/cm², 2.21V |
| 32 | 40%-100% | Open container/spray column | Commercially available vacuum fiber membrane distillation reactor | 35wt% | 40wt% | 250mA/cm², 2.13V |
| 33 | | | | | 45wt% | 250mA/cm², 2.16V |
| 34 | | | | | 50wt% | 250mA/cm², 2.22V |
| 35 | 30%-100% | Open container/s pray column | Commercially available vacuum fiber membrane distillation reactor | 40wt% | 45wt% | 250mA/cm², 2.15V |
| 36 | | | | | 50wt% | 250mA/cm², 2.22V |

### Example 3:

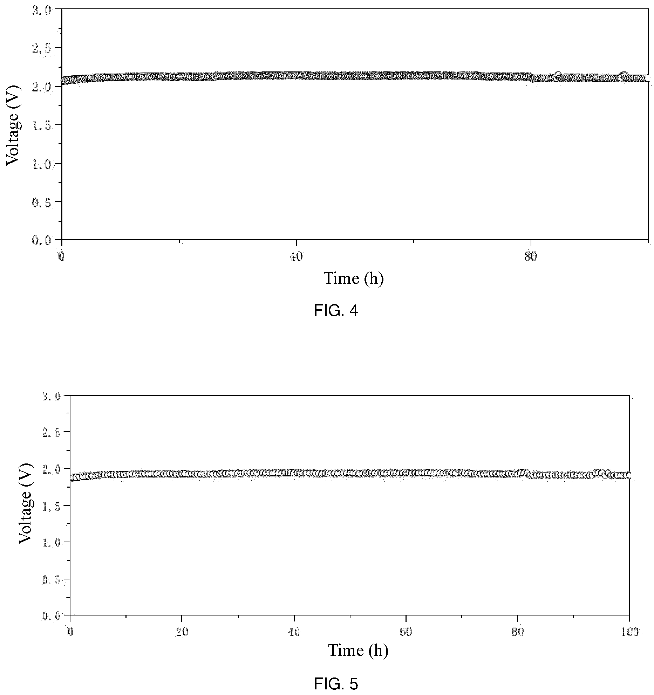

A direct air electrolytic hydrogen production system, which has the same structure as that of Example 2, with a difference that the electrolyzer is a commercial alkaline electrolyzer; a PTFE porous waterproof and breathable membrane was used as the waterproof and breathable layer in the second-stage energy-free mass transfer device, with an effective mass transfer area of 2m²; 50 wt% potassium hydroxide solution was used as the electrolyte; 30 wt% lithium chloride solution was used as the hygroscopic medium; and the first-stage energy-free mass transfer device was an open container, with an effective contact area of 4m² with air. As shown in FIG. 4, both lithium chloride solution and the electrolyte solution were at room temperature, the device was tested at an average temperature of 25°C and an average humidity of 65% under the condition of 250mA/cm², which steadily operated for 100h at an actual stack voltage of about 2.1V.

For other embodiments using the system, refer to the method and steps described in Example 3, with the differences as shown in Table 2:

| No. | Humidity | First-stage energy-free mass transfer device | Waterproof and breathable layer in second-stage energy-free mass transfer device | Hygroscop ic medium | Electrolyt e | Technical effects |
|---|---|---|---|---|---|---|
| 1 | 50%-100% | Open container | Self-made second-stage energy-free mass transfer device, wherein the waterproof and breathable layer is made of PTFE waterproof and breathable membrane with 0.1/0.45/1/3um pore size. | 30wt% | 35wt% | 250mA/cm², 2.02V |
| 2 | | | | | 40wt% | 250mA/cm², 2.06V |
| 3 | | | | | 45wt% | 250mA/cm², 2.08V |
| 4 | | | | | 50wt% | 250mA/cm², 2.1V |
| 5 | 40%-100% | | Self-made second-stage energy-free mass transfer device, wherein the waterproof and breathable layer is made of PTFE waterproof and breathable membrane with 0.1/0.45/1/3um pore size. | 35wt% | 40wt% | 250mA/cm², 2.05V |
| 6 | | | | | 45wt% | 250mA/cm², 2.07V |
| 7 | | | | | 50wt% | 250mA/cm², 2.1V |
| 8 | 30%-100% | | Self-made second-stage energy-free mass transfer device, wherein the waterproof and breathable layer is made of PTFE waterproof and breathable membrane with 0.1/0.45/1/3um pore size. | 40wt% | 45wt% | 250mA/cm², 2.05V |
| 9 | | | | | 50wt% | 250mA/cm², 2.09V |
| 10 | 50%-100% | Falling-film column | Self-made second-stage energy-free mass transfer device, wherein the waterproof and breathable layer is made of PTFE waterproof and breathable membrane with 0.1/0.45/1/3um pore size. | 30wt% | 35wt% | 250mA/cm², 2.01V |
| 11 | | | | | 40wt% | 250mA/cm², 2.05V |
| 12 | | | | | 45wt% | 250mA/cm², 2.08V |
| 13 | | | | | 50wt% | 250mA/cm², 2.11V |
| 14 | 40%-100% | Falling-film column | Self-made second-stage energy-free mass transfer device, wherein the waterproof and breathable layer is made of PTFE waterproof and breathable membrane with 0.1/0.45/1/3um pore size. | 35wt% | 40wt% | 250mA/cm², 2.04V |
| 15 | | | | | 45wt% | 250mA/cm², 2.07V |
| 16 | | | | | 50wt% | 250mA/cm², 2.10V |
| 17 | 30%-100% | Falling-film column | Self-made second-stage energy-free mass transfer device, wherein the waterproof and breathable layer is made of PTFE waterproof and breathable membrane with 0.1/0.45/1/3um pore size. | 40wt% | 45wt% | 250mA/cm², 2.07V |
| 18 | | | | | 50wt% | 250mA/cm², 2.10V |
| 19 | 50%-100% | Open container/s pray column | Commercially available flat membrane distillation reactor | 30wt% | 35wt% | 250mA/cm², 2.02V |
| 20 | | | | | 40wt% | 250mA/cm², 2.06V |
| 21 | | | | | 45wt% | 250mA/cm², 2.07V |
| 22 | | | | | 50wt% | 250mA/cm², 2.10V |
| 23 | 40%-100% | Open container / Spray column | Commercially available flat membrane distillation reactor | 35wt% | 40wt% | 250mA/cm², 2.04V |
| 24 | | | | | 45wt% | 250mA/cm², 2.06V |
| 25 | | | | | 50wt% | 250mA/cm², 2.09V |
| 26 | 30%-100% | Open container/s pray column | Commercially available flat membrane distillation reactor | 40wt% | 45wt% | 250mA/cm², 2.07V |
| 27 | | | | | 50wt% | 250mA/cm², 2.09V |
| 28 | 50%-100% | Open container/s pray column | Commercially available vacuum fiber membrane distillation reactor | 30wt% | 35wt% | 250mA/cm², 2.01V |
| 29 | | | | | 40wt% | 250mA/cm², 2.06V |
| 30 | | | | | 45wt% | 250mA/cm², 2.08V |
| 31 | | | | | 50wt% | 250mA/cm², 2.10V |
| 32 | 40%-100% | Open container/s pray column | Commercially available vacuum fiber membrane distillation reactor | 35wt% | 40wt% | 250mA/cm², 2.03V |
| 33 | | | | | 45wt% | 250mA/cm², 2.06V |
| 34 | | | | | 50wt% | 250mA/cm², 2.10V |
| 35 | 30%-100% | Open container/s pray column | Commercially available vacuum fiber membrane distillation reactor | 40wt% | 45wt% | 250mA/cm², 2.07V |
| 36 | | | | | 50wt% | 250mA/cm², 2.08V |

### Example 4:

A direct air electrolytic hydrogen production system, which has the same structure as that of Example 2, with a difference that the electrolyzer is a commercial alkaline electrolyzer; a PTFE porous waterproof and breathable membrane was used as the waterproof and breathable layer in the second-stage energy-free mass transfer device, with an effective mass transfer area of 2m²; 50 wt% potassium hydroxide solution was used as the electrolyte; 30 wt% lithium chloride solution was used as the hygroscopic medium; and the first-stage energy-free mass transfer device was an open container, with an effective contact area of 4m² with air. As shown in FIG. 5, the lithium chloride solution in the first-stage energy-free mass transfer device was at room temperature, the lithium chloride solution in the second-stage energy-free mass transfer device was at 50°C, the KOH solution in the second-stage energy-free mass transfer device was at 60°C, and the device was tested at an average temperature of 25°C and an average humidity of 65% under the condition of 250mA/cm², which steadily operated for 100h, the actual voltage of the electrostack is about 1.82V.

For other embodiments using the system, refer to the method and steps described in Example 4, with the differences as shown in Table 3:

| No. | LiCl concen tration | Temperature of LiCl solution in first-stage energy-free mass transfer device | Temperature of LiCl solution in second-stage energy-free mass transfer device | KOH concentrati on | Temperature of KOH solution in second-stage energy-free mass transfer device | Technical effects |
|---|---|---|---|---|---|---|
| | 30wt% | 25°C | >65°C | 30wt% | 60°C | 250mA/cm², 1.85V |
| | | | >60°C | 35wt% | | 250mA/cm², 1.87V |
| | | | >55°C | 40wt% | | 250mA/cm², 1.88V |
| | | | >50°C | 45wt% | | 250mA/cm², 1.90V |
| | | | >45°C | 50wt% | | 250mA/cm², 1.93V |
| | 30wt% | 30°C | >65°C | 30wt% | 60°C | 250mA/cm², 1.82V |
| | | | >60°C | 35wt% | | 250mA/cm², 1.84V |
| | | | >55°C | 40wt% | | 250mA/cm², 1.88V |
| | | | >50°C | 45wt% | | 250mA/cm², 1.90V |
| | | | >45°C | 50wt% | | 250mA/cm², 1.92V |
| | 30wt% | 35°C | >65°C | 30wt% | 60°C | 250mA/cm², 1.83V |
| | | | >60°C | 35wt% | | 250mA/cm², 1.86V |
| | | | >55°C | 40wt% | | 250mA/cm², 1.88V |
| | | | >50°C | 45wt% | | 250mA/cm², 1.91V |
| | | | >45°C | 50wt% | | 250mA/cm², 1.94V |
| | 40wt% | 25°C | >75°C | 35wt% | 60°C | 250mA/cm², 1.85V |
| | | | >70°C | 40wt% | | 250mA/cm², 1.89V |
| | | | >65°C | 45wt% | | 250mA/cm², 1.92V |
| | | | >60°C | 45wt% | | 250mA/cm², 1.96V |
| | 40wt% | 30°C | >75°C | 35wt% | 60°C | 250mA/cm², 1.85V |
| | | | >70°C | 40wt% | | 250mA/cm², 1.89V |
| | | | >65°C | 45wt% | | 250mA/cm², 1.92V |
| | | | >60°C | 45wt% | | 250mA/cm², 1.96V |
| | 40wt% | 30°C | >75°C | 35wt% | 60°C | 250mA/cm², 1.81V |
| | | | >70°C | 40wt% | | 250mA/cm², 1.86V |
| | | | >65°C | 45wt% | | 250mA/cm², 1.92V |
| | | | >60°C | 45wt% | | 250mA/cm², 1.97V |

It can be seen from the above-mentioned embodiments that the system will realize direct air electrolytic hydrogen production, while its energy consumption for electrolysis is comparable to that of industrial pure water electrolysis for hydrogen production, without additional energy consumption for desalination/purification of impure water solutions or for harvesting moisture from the air.

All of the features disclosed in the Description, or all of the steps of any method or process implicitly disclosed, may be combined and/or extended and substituted in any way, except combinations where such features and/or steps are mutually exclusive.

The above-mentioned embodiments are only preferred embodiments of the present application and are not restricted thereto in any way. Any simple modification, equivalent replacement and alteration made to these embodiments within the spirit and rule of the present application based on the technical essence thereof shall be incorporated in the protection scope of the technical solutions of the present application.

## Claims

1. A direct air electrolytic hydrogen production system, comprising an energy supply module, an electrolytic hydrogen production module, an electrolyte recycling module and a moisture vapor self-trapping module, wherein the energy supply module is connected to the electrolytic hydrogen production module;
the electrolytic hydrogen production module comprises an electrolyzer, when an electrolyte is introduced into the electrolyzer, a redox reaction occurs, which consumes water and produces hydrogen and oxygen; and
the electrolyte recycling module is connected to the electrolytic hydrogen production module and the moisture vapor self-trapping module, separately; and the moisture vapor self-trapping module, for absorbing moisture in the air, is used as a source continuously providing water for electrolytic hydrogen production.

2. The direct air electrolytic hydrogen production system according to claim 1, wherein an energy source of the energy supply module is electrical energy converted from conventional coal power or renewable energy.

3. The direct air electrolytic hydrogen production system according to claim 1, wherein the electrolyzer is optionally selected from an alkaline electrolyzer, a PEM electrolyzer, an AEM electrolyzer, or a combination formed by connecting any one of these electrolyzers in series or in parallel.

4. The direct air electrolytic hydrogen production system according to claim 1, wherein the electrolyte recycling module comprises a second-stage energy consumption-free mass transfer device; the module is a module for realizing a "liquid-gas-liquid" phase change and migration process, which directly replenishes the electrolyte solution with pure water by using a hygroscopic medium; the second-stage energy consumption-free mass transfer device is a device that divides space into an electrolyte chamber and a hygroscopic medium chamber by means of a waterproof and breathable layer; when the electrolyte and the hygroscopic medium flow closely against the waterproof and breathable layer, an interfacial water vapor pressure difference between the electrolyte and the hygroscopic medium causes the hygroscopic medium to undergo phase-change gasification, the resulted water vapor enters the electrolyte side by passing through the waterproof and breathable layer, and undergoes secondary phase-change liquefaction in the presence of the interfacial pressure difference; also, the waterproof and breathable layer effectively prevents the electrolyte and the hygroscopic medium from contaminating each other by osmosis, and the process continuously replenishes the electrolyte with pure water for electrolysis; and the electrolysis consumes water to maintain the interfacial water vapor pressure difference between the electrolyte and the hygroscopic medium in the second-stage energy-free mass transfer device and an interfacial water vapor pressure difference between the hygroscopic medium and the air in a first-stage energy-free mass transfer device, thus inducing continuous replenishment of water to the electrolyte.

5. The direct air electrolytic hydrogen production system according to claim 1, wherein the moisture vapor self-trapping module comprises the first-stage energy consumption-free mass transfer device and a hygroscopic medium circulating pump; the module is a module for realizing a "gas-liquid" phase change and migration process, which is used for directly harvesting moisture from the air without water-collecting energy consumption, and the first-stage energy consumption-free mass transfer device is a container for convection or contact mass transfer between the hygroscopic medium and the air, or a device for gas-liquid phase mass transfer; and the hygroscopic medium absorbs moisture from the air in the first-stage energy consumption-free mass transfer device and further replenishes the electrolyte with water in the second-stage energy consumption-free mass transfer device in the electrolyte recycling module.

6. The direct air electrolytic hydrogen production system according to claim 4, wherein the waterproof and breathable layer is a commercially available waterproof and breathable layer, or a porous waterproof and breathable mass transfer layer selected from any of a porous TPU membrane, PDMS and a PTFE membrane, or prepared with graphene, PVDF particles or PTFE particles by spraying, screen printing or an electrostatic adsorption process.

7. The direct air electrolytic hydrogen production system according to claim 1, wherein the electrolyte loaded in the electrolyzer is a liquid electrolyte or a solid gel electrolyte; wherein the liquid electrolyte is a liquid having a low saturated water vapor pressure or having the function of absorbing water vapor; and wherein the solid electrolyte is a substance having the function of inducing the phase-change liquefaction of water vapor.

8. The direct air electrolytic hydrogen production system according to any of claims 1 to 7, wherein the system further comprises a hydrogen collecting module and an oxygen collecting module; wherein the hydrogen collecting module comprises a hydrogen separator, a hydrogen scrubber, a hydrogen cooler and a hydrogen storage tank; the oxygen collecting module comprises an oxygen separator, an oxygen scrubber, an oxygen cooler and an oxygen storage tank; both of the hydrogen separator and the oxygen separator are separately connected to the electrolyzer, and the hydrogen scrubber, the hydrogen cooler and the hydrogen storage tank are connected sequentially behind the hydrogen separator; and the oxygen scrubber, the oxygen cooler and the oxygen storage tank are connected sequentially behind the oxygen separator.

9. The direct air electrolytic hydrogen production system according to claim 8, wherein the system further comprises a cooling module, and the module comprises a radiator, a cooling water tank and a cooling water pump; the cooling water tank is connected to the radiator, and connected to the hydrogen separator, the hydrogen scrubber, the hydrogen cooler, the oxygen separator, the oxygen scrubber, the oxygen cooler and a heat exchanger through the cooling water pump to provide cooling water.

10. The direct air electrolytic hydrogen production system according to claim 9, wherein the electrolyte pumped out of the electrolyzer and the electrolyte collected from the hydrogen separator, the oxygen separator, the hydrogen scrubber and the oxygen scrubber pass through the heat exchanger and a filter and then enters the second-stage energy-free mass transfer device.

11. The direct air electrolytic hydrogen production system according to claim 9 or 10, wherein a temperature controller is coupled in front of the first-stage energy consumption-free mass transfer device to realize temperature control of the hygroscopic medium, thereby regulating the interfacial vapor pressure of the hygroscopic medium in the first-stage energy consumption-free mass transfer device and achieving better moisture absorption from the air; and another temperature controller is coupled in front of the second-stage energy consumption-free mass transfer device to realize temperature control of the hygroscopic medium, thereby regulating the interfacial vapor pressure of the hygroscopic medium in the second-stage energy consumption-free mass transfer device and achieving better secondary migration mass-transfer effect and controllable regulation.

12. The direct air electrolytic hydrogen production system according to claim 11, wherein each module in the system is connected to a control system for automating the control process.

13. A direct air electrolytic hydrogen production system, comprising an energy supply module, an electrolyzer, a hydrogen separator, a hydrogen scrubber, a hydrogen regulating valve, a hydrogen check valve, a hydrogen cooler, a hydrogen storage tank, an oxygen separator, an oxygen scrubber, an oxygen regulating valve, an oxygen check valve, an oxygen cooler, an oxygen storage tank, a radiator, a cooling water tank, a cooling water pump, a heat exchanger, a filter, a second-stage energy consumption-free mass transfer device, an electrolyte circulating pump, an electrolyte check valve, an electrolyte temperature controller, a hygroscopic medium check valve, a hygroscopic medium circulation pump and a first-stage energy consumption-free mass transfer device; wherein the second-stage energy consumption-free mass transfer device divides a confined space into an electrolyte mass-transfer chamber and a hygroscopic medium mass-transfer chamber by means of a waterproof and breathable layer; the first-stage energy consumption-free mass transfer device is a container for convection or contact between a hygroscopic medium and air, or a device for gas-liquid phase mass transfer; the energy supply module is connected to a cathode and an anode of the electrolyzer to provide electricity; the hydrogen separator is disposed on the cathode side of the electrolyzer, and the hydrogen scrubber, the hydrogen regulating valve, the hydrogen check valve, the hydrogen cooler and the hydrogen storage tank are arranged sequentially behind the hydrogen separator; the oxygen separator is disposed on the anode side of the electrolyzer, and the oxygen scrubber, the oxygen regulating valve, the oxygen check valve, the oxygen cooler and the oxygen storage tank are arranged sequentially behind the oxygen separator; the electrolyzer, the hydrogen separator and the oxygen separator are connected to the heat exchanger, and the heat exchanger is connected to the filter and then communicated with the second-stage energy consumption-free mass transfer device; the second-stage energy consumption-free mass transfer device is connected to the electrolyte temperature controller through the electrolyte circulating pump and the electrolyte check valve, and the electrolyte temperature controller is connected to the electrolyzer; the first-stage energy consumption-free mass transfer device is loaded with the hygroscopic medium, the hygroscopic medium undergo mass transfer with air to absorb moisture from the air, and the first-stage energy consumption-free mass transfer device is in circular connection with the second-stage energy consumption-free mass transfer device through the hygroscopic medium circulating pump, the hygroscopic medium check valve and a corresponding pipeline; and the cooling water tank is connected to the hydrogen separator, the hydrogen scrubber, the hydrogen cooler, the oxygen separator, the oxygen scrubber, the oxygen cooler and the heat exchanger through the cooling water pump, separately.

14. A direct air electrolytic hydrogen production process, comprising the following steps:
moisture in the air is transferred to a hygroscopic medium in a first-stage energy consumption-free mass transfer device in a moisture vapor self-trapping module, the moistened hygroscopic medium further transfers the moisture to an electrolyte side in a second-stage energy consumption-free mass transfer device in an electrolyte recycling module, an electrolyte obtaining the pure water undergoes an electrolytic hydrogen production reaction in an electrolyzer and the reaction consumes moisture; the electrolysis consumes moisture synchronously, further maintaining an interfacial pressure difference between the electrolyte and the hygroscopic medium as well as an interfacial pressure difference between the hygroscopic medium and the air, thus further promoting the hygroscopic medium to obtain moisture from the air and replenish to the electrolyte; and during the process, when an electrolysis rate equals a first-stage mass transfer rate and a second-stage mass transfer rate concurrently, the continuous and stable direct air electrolytic hydrogen production process is realized.

15. The direct air electrolytic hydrogen production process according to claim 14, wherein the process comprises the following steps: an energy supply module providing electricity for an electrolytic hydrogen production module; first, the electrolyte is connected to a cathode, or an anode, or both of the cathode and the anode of the electrolyzer, and a redox reaction occurs for producing hydrogen and oxygen; for the case of an alkaline electrolyzer or an AEM electrolyzer, the electrolyte undergoes a reduction and hydrogen evolution reaction at the cathode, and then the produced OH⁻ enters the anode by passing through a diaphragm or an anion exchange membrane, and an oxidation reaction occurs and produces oxygen; for the case of a PEM electrolyzer, the electrolyte undergoes an oxidation and oxygen evolution reaction at the anode, and then the produced H⁺ enters the cathode by passing through a proton exchange membrane, and a reduction reaction occurs and produces hydrogen;
the produced hydrogen and oxygen enter a hydrogen separator and an oxygen separator, respectively, during the process the produced hydrogen and oxygen are separated from the entrained electrolyte or moisture; the separated hydrogen and oxygen enter a hydrogen scrubber and an oxygen scrubber, respectively, during the process the remained electrolyte and moisture are thoroughly scrubbed from the gases;
under the control regulation of a hydrogen regulating valve and a hydrogen check valve, the scrubbed hydrogen enters a hydrogen cooler to be dried and cooled, and then stored in a hydrogen storage tank; under the control regulation of an oxygen regulating valve and an oxygen check valve, the scrubbed oxygen enters an oxygen cooler to be dried and cooled, and then stored in an oxygen storage tank;
the post-reaction electrolyte in the electrolyzer and the electrolyte separated and recycled from the hydrogen separator, the hydrogen scrubber, the oxygen separator and the oxygen scrubber passes through a heat exchanger, and any possibly entrained impurity is removed through a filter; after the impurity removal, the electrolyte enters an electrolyte chamber A in the second-stage energy consumption-free mass transfer device, and the hygroscopic medium is continuously sent to a hygroscopic medium chamber B, wherein the two chambers are isolated from each other by using a waterproof and breathable layer, which only allows water vapor to pass through to prevent the liquids from contaminating each other by osmosis; in that case, when the electrolyte and the hygroscopic medium simultaneously pass through the second-stage energy consumption-free mass transfer device, under the interfacial pressure difference therebetween, the hygroscopic medium is gasified on the surface of the waterproof and breathable layer and produces water vapor, the water vapor enters the electrolyte side by passing through the waterproof and breathable layer, and undergoes phase-change liquefaction in the presence of the interfacial pressure difference to replenish the electrolyte with water; and the electrolyte with replenished water enters a temperature controller through an electrolyte circulating pump and a check valve, and then circulates into the electrolyzer after the optimal electrolytic temperature is reached to cause an electrolytic hydrogen production reaction; and after the moisture in the hygroscopic medium is transferred to the electrolyte, the hygroscopic medium circulates to the first-stage energy consumption-free mass transfer device in the moisture vapor trapping module, and absorbs moisture in the air under the effect of the interfacial pressure difference between air and the hygroscopic medium, thereby preparing for water replenishment to the electrolyte in the next cycle.
